# EUROPEAN PATENT APPLICATION

(11) **EP 3 998 002 A1**
(43) Date of publication of application: **18.05.2022**
(21) Application number: 20837629.3
(22) Date of filing: 10.07.2020
(51) Int. Cl.: A47G 1/00

(54) **MIRROR**

(30) Priority: 11.07.2019 JP 2019129675
(71) Applicant: NIPPON SHEET GLASS COMPANY, LIMITED, Tokyo 108-6321 (JP)
(72) Inventor: TAGUCHI, Masafumi, Tokyo 108-6321 (JP); OYA, Kazuaki, Tokyo 108-6321 (JP); SHIMOKAWA, Yohei, Tokyo 108-6321 (JP)
(74) Representative: Mewburn Ellis LLP
(86) International application number: PCT/JP2020/027116
(87) International publication number: WO 2021/006348

(57) **Abstract**

The present invention includes a mirror main body formed in a polygonal shape in a plan view and having a first main face that reflects an image, a second main face that is opposite to the first main face, and a peripheral edge face that connects the first main face and the second main face to each other, in which the peripheral edge face includes a plurality of first end faces and a second end face that connects the adjacent first end faces, and the second end face constitutes a first chamfered portion formed at an outer edge of the mirror main body in a plan view.

## Description

### Technical Field

The present invention relates to a mirror.

### Background Art

There are various mirrors, and Patent Literature 1 discloses an anti-corrosion mirror, for example.

### Citation List

### Patent Literature

Patent Literature 1: JP 2010-330A

### Summary of Invention

### Technical Problem

Because a mirror includes a glass plate as a constituent element, a mirror needs to be handled with care, and if a mirror is dropped, the mirror may crack or chip. The present invention was made to resolve the above-described issue, and an object thereof is to provide a mirror that is unlikely to chip even when dropped.

### Solution to Problem

Item 1. A mirror including:
a mirror main body formed in a polygonal shape in a plan view and having a first main face that reflects an image, a second main face that is opposite to the first main face, and a peripheral edge face that connects the first main face and the second main face to each other,
in which the peripheral edge face includes a plurality of first end faces and a second end face that connects the adjacent first end faces, and
the second end face constitutes a first chamfered portion formed at an outer edge of the mirror main body in a plan view.

Item 2. The mirror according to Item 1,
in which a second chamfered portion is formed between the first main face and the peripheral edge face.

Item 3. The mirror according to Item 1 or 2, further including
an antifog layer covering at least a portion of the first main face.

Item 4. The mirror according to Item 3,
in which the antifog layer and the first main face are chemically bonded.

Item 5. The mirror according to Item 3 or 4, further including
an undercoat layer disposed between the antifog layer and the first main face.

Item 6. The mirror according to any one of Items 3 to 5,
in which a second chamfered portion is formed between the first main face and the peripheral edge face, and
the antifog layer is disposed so as to cover the second chamfered portion.

Item 7. The mirror according to Item 6,
in which the antifog layer is disposed so as to cover the peripheral edge face.

Item 8. The mirror according to Item 7,
in which the antifog layer has a pencil hardness of H to 2H.

Item 9. The mirror according to any one of Items 3 to 8,
in which the antifog layer has a thickness of 2 to 12 µm.

Item 10. The mirror according to any one of Items 3 to 9,
in which the antifog layer is not disposed in a peripheral edge region having a predetermined width and extending from the peripheral edge of the first main face toward the center thereof.

Item 11. The mirror according to any one of Items 3 to 9,
in which the entire first main face is covered by the antifog layer.

Item 12. The mirror according to any one of Items 3 to 11,
in which the antifog layer is disposed so as to cover the peripheral edge face, and
the thickness of the antifog layer disposed on the peripheral edge face is larger than the thickness of the antifog layer disposed on the first main face.

Item 13. The mirror according to any one of Items 3 to 12,
in which the antifog layer has antifog performance as a result of being hydrophilic.

Item 14. The mirror according to Item 13,
in which the antifog layer further has antifog performance as a result of having a water absorbing property.

Item 15. The mirror according to Item 11,
in which the antifog layer is made of a material containing a water absorbent resin as a main component.

Item 16. The mirror according to Item 15,
in which the water absorbent resin contains at least one of an epoxy resin and a polyvinyl acetal resin.

Item 17. The mirror according to any one of Items 3 to 16,
in which the antifog layer has a shatterproof function.

Item 18. The antifog mirror according to Item 17, in which the antifog layer has a cross-linked structure formed by a hydrolyzable metallic compound.

Item 19. The antifog mirror according to Item 18, in which the hydrolyzable metallic compound is made of silicon alkoxide.

Item 20. The antifog mirror according to any one of Items 17 to 19,
in which adhesion of the antifog layer to the mirror main body is classified as classification 0 or 1 in a cross-cut test defined in JIS K5600-5-6.

Item 21. The antifog mirror according to any one of Items 17 to 20,
in which the antifog layer is not split when a linear cut is formed in the second main face of the mirror main body using a cutter, a round bar placed on a horizontal surface is brought into contact with the antifog layer facing downward so as to coincide with the cut, and the mirror main body is cracked by pressing both sides of the cut.

Item 22. The mirror according to any one of Items 3 to 21, further including
a protective film covering the antifog layer.

Item 23. The mirror according to Item 22,
in which the protective film has a sheet-shaped base member and an adhesive layer disposed on one face of the base member,
the base member is bonded to the antifog layer by the adhesive layer, and
a peripheral edge portion of the base member has a region where the adhesive layer is not disposed.

Item 24. The mirror according to Item 23,
in which the antifog layer is disposed so as to cover the peripheral edge face, and
the protective film is not bonded to at least a portion of the antifog layer covering the peripheral edge face.

Item 25. The mirror according to any one of Items 22 to 24,
in which the protective film is formed so as to protrude from the mirror main body at a portion where the first chamfered portion is formed.

Item 26. The mirror according to any one of Items 22 to 25,
in which the protective film has a flexural strength of 96 to 131 MPa.

Item 27. The mirror according to any one of Items 22 to 26,
in which the protective film has a thickness of 30 to 90 µm.

Item 28. The mirror according to any one of Items 22 to 27,
in which the protective film is configured to cover the antifog layer in a state where the protective film is divided into a plurality of portions.

Item 29. The mirror according to any one of Items 1 to 28,
in which the mirror main body includes
a metalloid layer laminated on one face of the glass plate,
a resin protective layer laminated on the metalloid layer, and
an inorganic oxide layer made of an inorganic oxide and laminated between the metalloid layer and the protective layer.

Item 30. The mirror according to Item 29,
in which the metalloid layer contains Si or Ge as a main component.

Item 31. The mirror according to any one of Items 1 to 28,
in which the mirror main body includes
a glass plate,
a metal layer laminated on one face of the glass plate, and
a resin protective layer laminated on the metal layer.

Item 32. The mirror according to Item 31,
in which another face of the glass plate constitutes the first main face, and
an antifog layer is disposed so as to cover the first main face.

Item 33. The mirror according to Item 31 or 32, further including
a peripheral edge protective layer disposed so as to cover a first interface between the glass plate and the metal layer and a second interface between the metal layer and the protective layer, on the peripheral edge face.

Item 34. The mirror according to Item 31,
in which another face of the glass plate constitutes the first main face,
an antifog layer is disposed so as to cover the first main face,
the mirror further includes a peripheral edge protective layer disposed so as to cover a first interface between the glass plate and the metal layer and a second interface between the metal layer and the protective layer, on the peripheral edge face, and
a portion of the antifog layer covers the peripheral edge protective layer.

Item 35. The mirror according to Item 33 or 34, in which the peripheral edge protective layer is made of an ultraviolet curable resin.

Item 36. The mirror according to any one of Items 33 to 35,
in which, on the peripheral edge face, an end face of the glass plate exposed to the outside is provided with a region that is not covered by the peripheral edge protective layer.

Item 37. The mirror according to any one of Items 31 to 36, further including
a shatterproof film configured to prevent fragments from scattering when the mirror main body cracks,
in which the shatterproof film is disposed so as to cover the protective layer.

Item 38. The mirror according to any one of Items 31 to 37,
in which various types of information is written on the protective layer.

Item 39. The mirror according to any one of Items 3 to 38,
in which it takes 30 seconds or more for dew to form on the antifog layer.

### Advantageous Effects of Invention

The present invention makes it possible to make a mirror unlikely to chip even when the mirror is dropped.

### Brief Description of Drawings

FIG. 1 is a plan view showing an embodiment of a mirror according to the present invention.
FIG. 2 is a cross-sectional view of FIG. 1.
FIG. 3 is a cross-sectional view showing another example of the mirror according to the present invention.
FIG. 4 is a cross-sectional view showing another example of the mirror according to the present invention.
FIG. 5 is a cross-sectional view showing another example of the mirror according to the present invention.
FIG. 6 is a cross-sectional view showing another example of the mirror according to the present invention.
FIG. 7 is a schematic diagram of a device for evaluating antifog performance.
FIG. 8 is a cross-sectional view showing another example of the mirror according to the present invention.

### Description of Embodiments

Next, an embodiment of a mirror according to the present invention will be described with reference to the drawings. The mirror according to this embodiment includes a mirror main body. The following describes a mirror main body, and then describes various additional elements attached to the mirror main body, such as an antifog layer.

### 1. Overview of mirror main body

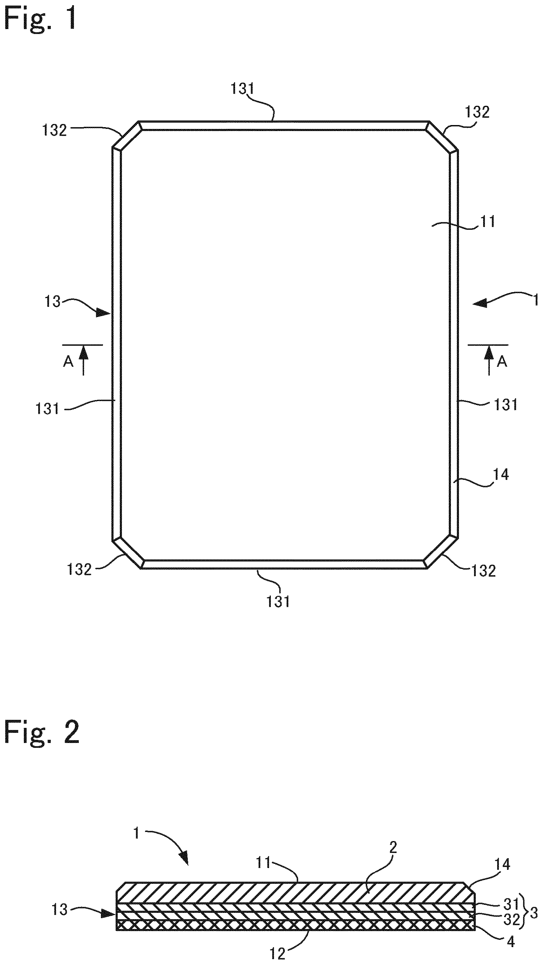

FIG. 1 is a plan view of the mirror main body, and FIG. 2 is a cross-sectional view of the mirror main body taken along line A-A. As shown in FIGS. 1 and 2, a mirror main body 1 is formed so that the outer shape thereof is a rectangular shape in a plan view, and has a first main face 11 that reflects an image, a second main face 12 that is opposite to the first main face 11, and a peripheral edge face 13 that connects the first main face 11 and the second main face 12 to each other. However, the planar shape of the mirror main body 1 is not particularly limited, and may be formed in a polygonal shape in addition to a rectangular shape such as that as shown in FIG. 1.

The peripheral edge face 13 includes four first end faces 131, and second end faces 132 that connect adjacent first end faces 131. The four first end faces 131 are end faces that respectively constitute four main sides of the rectangular shape, and adjacent first end faces 131 are orthogonal to each other. Each second end face 132 is connected to adjacent first end faces 131 so as to extend obliquely in a plan view. That is, each second end face 132 constitutes a chamfered portion of the peripheral edge of the mirror main body 1 in a plan view. Hereinafter, the second end face 132 will be referred to as a "first chamfered portion".

Also, as shown in FIGS. 1 and 2, it is also possible to form a chamfered portion 14 between the first main face 11 and the peripheral edge face 13, but it is not essential. Hereinafter, this chamfered portion 14 may be referred to as a "second chamfered portion". The second chamfered portion 14 is formed on a later-described glass plate 2, as seen in a cross-section, and is connected to the first main face 11 and the peripheral edge face 13 so as to extend obliquely with respect to the first main face 11 and the peripheral edge face 13.

### 2. Layer Structure of Mirror Main Body

As shown in FIG. 2, the mirror main body 1 includes the glass plate 2 having a first face (a lower face) and a second face (an upper face), a metal layer 3 laminated on the first face of the glass plate 2, and a protective layer 4 laminated so as to cover the metal layer 3, and the second face of the glass plate 2 constitutes the first main face 11. Hereinafter, each constituent member of the mirror main body 1 will be described.

### 2-1. Glass plate

A known glass plate can be utilized as the glass plate 2 according to this embodiment, and the glass plate 2 can also be made of heat absorbing glass, ordinary clear glass, ordinary green glass, or UV green glass. The following describes examples of clear glass, heat absorbing glass, and soda-lime based glass.

### Clear Glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkaline metal)
Total iron oxide in terms of Fe₂O₃ (T-Fe₂O₃): 0.08 to 0.14 mass%

### Heat Absorbing Glass

The composition of heat absorbing glass can, for example, be given as a composition, based on the composition of clear glass, including total iron oxide in terms of Fe₂O₃ (T-Fe₂O₃) at a ratio of 0.4 to 1.3 mass%, CeO₂ at a ratio of 0 to 2 mass%, and TiO₂ at a ratio of 0 to 0.5 mass%, and in which the skeletal component (mainly SiO₂ or Al₂O₃) of the glass is reduced by an amount equivalent to the increase in T-Fe₂O₃, CeO₂ and TiO₂.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the glass plate 2 according to this embodiment, the thickness of the glass plate 2 is preferably set to 1 to 10 mm, and more preferably 3 to 8 mm, for example.

### 2-2. Metal Layer

The metal layer 3 is constituted by a silver mirror film 31 and a copper film 32. That is, a known silver mirror film 31 for reflecting an image is laminated on the first face of the glass plate 2, and the copper film 32 is laminated thereon so as to cover the silver mirror film 31. The copper film 32 functions as a protective layer of the silver mirror film 31. However, the copper film 32 can be omitted, and the metal layer may also be formed by the silver mirror film 31 alone.

### 2-3. Protective Layer

The protective layer 4 is a layer that covers the above-described copper film 32, and can be made of a resin material such as an epoxy resin or an acrylic silicon resin. Also, various types of information relating to the mirror, such as information regarding a later-described antifog layer, such as the location and the date of manufacture of the mirror, can be added to the protective layer 4 through printing.

### 2-4. Peripheral Edge Protective Layer

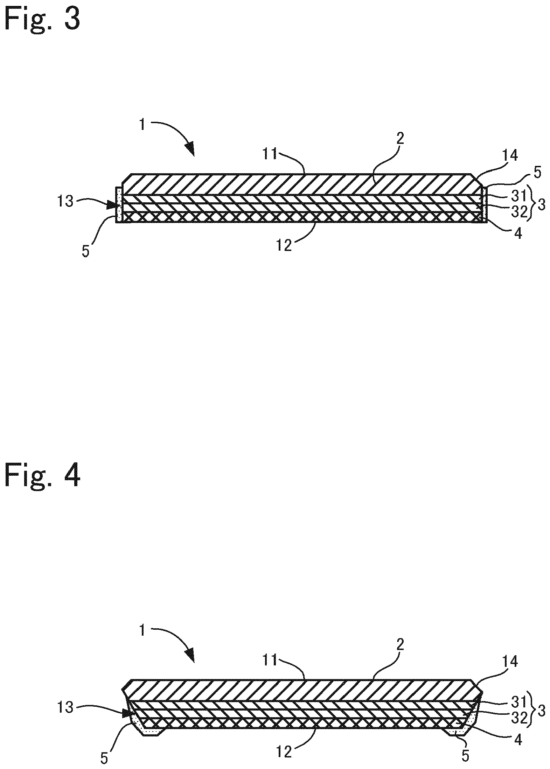

The mirror main body 1 is formed by laminating the glass plate 2, the metal layer 3, and the protective layer 4 in the stated order, and thus the interfaces thereof are exposed from the peripheral edge face 13. Thus, if moisture enters from these interfaces, the metal layer 3 may deteriorate. In view of this, as shown in FIG. 3, it is possible to provide a peripheral edge protective layer 5 that covers the peripheral edge face 13 of the mirror main body 1 as needed. The peripheral edge protective layer 5 can be made of a resin material such as a UV curable resin, a twin pack epoxy resin, or a thermosetting resin, for example. Note that, as shown in FIG. 4, in order to facilitate the lamination of the peripheral edge protective layer 5, a notch (can also be a chamfered portion) that obliquely extends in a cross-section of the peripheral edge face 13 may be formed and the peripheral edge protective layer 5 may be laminated so as to cover this notch. In this case, as shown in FIG. 4, the end face of the glass plate 2 may be exposed or covered by the peripheral edge protective layer 5. Note that the notch is formed to extend obliquely inward from the end face of the glass plate 2 toward the protective layer 4, such that the interfaces between the glass plate 2, the metal layer 3, and the protective layer 4 are located at this notch.

### 3. Antifog Layer

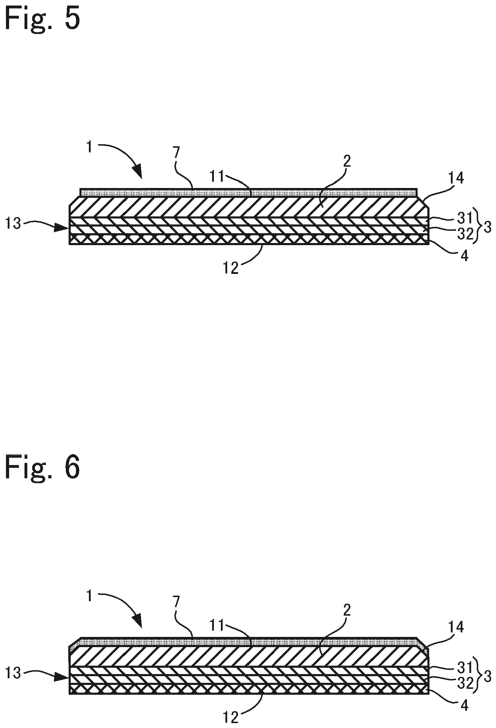

As shown in FIG. 5, an antifog layer 7 can be laminated on the second main face 12 of the glass plate 2 of the above-described mirror main body 1 as needed. Hereinafter, the antifog layer 7 will be described in detail.

There is no particular limitation on the antifog layer 7, and a known antifog layer can be used as the antifog layer 7 as long as the antifog effect of the glass plate 2 can be achieved. In general, the types of antifog layer 7 include a hydrophilic type that turns water generated from water vapor into a water film on its surface, a water absorbent type that absorbs water vapor, a water-repellent and water absorbent type that suppresses the condensation of water droplets on the surface thereof, and a water repellent type that repels water droplets generated from water vapor, and any type of antifog layer can be used. The following describes an example of a water-repellent and water absorbent antifog layer as an example thereof.

### Organic-inorganic Composite Antifog Layer

An organic-inorganic composite antifog layer is a single-layer film or a laminated multi-layer film formed on the surface of the glass plate 2. The organic-inorganic composite antifog layer contains at least a water absorbent resin, a water repellent group, and a metallic oxide component. The antifog layer 7 may further contain other functional components as needed. There is no limitation on the type of water absorbent resin as long as a resin that can absorb and hold water is used. The antifog layer 7 can be supplied with a water repellent group using a metallic compound containing a water repellent group (water repellent group-containing metallic compound). The antifog layer 7 can be supplied with a metallic oxide component using a metallic compound other than the water repellent group-containing metallic compound, minute particles of a metallic oxide, or the like. Hereinafter, these components will be described.

### Water Absorbent Resin

There is no particular limitation on the water absorbent resin, and examples thereof include polyethylene glycol, polyether resin, polyurethane resin, starch-based resin, cellulosic resin, acrylic resin, epoxy resin, polyester polyol, hydroxyalkyl cellulose, polyvinyl alcohol, polyvinyl pyrrolidone, polyvinyl acetal resin, and polyvinyl acetate. In particular, hydroxyalkyl cellulose, polyvinyl alcohol, polyvinyl pyrrolidone, polyvinyl acetal resin, polyvinyl acetate, epoxy resin, and polyurethane resin are preferable, and polyvinyl acetal resin, epoxy resin, and polyurethane resin are more preferable, and polyvinyl acetal resin is particularly preferable.

Polyvinyl acetal resin can be obtained through acetalization of a product obtained through a condensation reaction of polyvinyl alcohol with an aldehyde. The acetalization of polyvinyl alcohol may be carried out using a known method such as a precipitation method in which an aqueous medium is used in the presence of an acid catalyst, or a dissolution method in which a solvent such as alcohol is used. Acetalization can also be carried out in parallel with saponification of polyvinyl acetate. The degree of acetalization is preferably 2 to 40 mol%, more preferably 3 to 30 mol%, particularly preferably 5 to 20 mol%, and preferably 5 to 15 mol% if necessary. The degree of acetalization can be measured based on ¹³C nuclear magnetic resonance spectroscopy, for example. A polyvinyl acetal resin having a degree of acetalization in the above-described range is suitable for forming an organic-inorganic composite antifog layer having favorable water absorbing properties and water resistance.

The average degree of polymerization of polyvinyl alcohol is preferably 200 to 4500, and more preferably 500 to 4500. A high average degree of polymerization is advantageous in the formation of an organic-inorganic composite antifog layer having favorable water absorbing properties and water resistance, but if the average degree of polymerization is excessively high, the viscosity of the solution will be excessively high, and the formation of a film may be negatively affected. The degree of saponification of the polyvinyl alcohol is preferably 75 to 99.8 mol%.

Examples of the aldehyde condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and a condensed aromatic ring aldehyde such as naphtaldehyde or anthraldehyde. Aromatic aldehydes, which are highly hydrophobic, are advantageous in the formation of an organic-inorganic composite antifog layer with a low degree of acetalization and high water resistance. Use of aromatic aldehydes is also advantageous in that a film having high water absorbing properties is formed while a large number of hydroxy groups are kept. It is preferable that the polyvinyl acetal resin has an acetal structure derived from an aromatic aldehyde, particularly benzaldehyde.

Examples of the epoxy resin include glycidyl ether-based epoxy resin, glycidyl ester-based epoxy resin, glycidyl amine-based epoxy resin, and cyclic aliphatic epoxy resin. In particular, the cyclic aliphatic epoxy resin is preferable.

Examples of the polyurethane resin include polyurethane resins composed of polyisocyanate and polyol. An acrylic polyol and a polyoxyalkylene polyol are preferable as polyols.

The organic-inorganic composite antifog layer contains water absorbent resin as the main component. In the present invention, the "main component" means a component with the highest content on the basis of mass. From the viewpoint of hardness, water absorbing properties, and antifog properties of a film, the content of the water absorbent resin based on the weight of the organic-inorganic composite antifog layer is preferably 50 wt% or more, more preferably 60 wt% or more, and particularly preferably 65 wt% or more, and preferably 95 wt% or less, and more preferably 90 wt% or less.

### Water Repellent Group

It is preferable to use a water repellent group, which has high water repellency, in order to sufficiently obtain the above-described effect of the water repellent group. A preferable water repellent group is at least one type selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may lead to the antifog layer 7 being opaque. The number of carbon atoms in the alkyl group is preferably 20 or less, and more preferably 6 to 14 from the viewpoint of balance between the antifog properties, strength, and external appearance of the film. Particularly preferable alkyl groups are linear alkyl groups having 6 to 14 carbon atoms, in particularly, linear alkyl groups having 6 to 12 carbon atoms, such as an n-hexyl group (6 carbon atoms), an n-decyl group (10 carbon atoms), and an n-dodecyl group (12 carbon atoms). The fluorine-substituted alkyl groups in (2) may be groups obtained by substituting only a portion of hydrogen atoms of a chain or a cyclic alkyl group with a fluorine atom, or groups obtained by substituting all of the hydrogen atoms of a chain or a cyclic alkyl group with a fluorine atom, such as linear perfluoroalkyl groups. The fluorine-substituted alkyl groups have high water repellency, and therefore, the effects can be sufficiently obtained by adding a small amount thereof. Note that, when the content of the fluorine-substituted alkyl groups is excessively high, a component containing the fluorine-substituted alkyl groups may separate from the other components in a coating solution for forming a film.

### Hydrolyzable Metallic Compound Containing Water Repellent Group

In order to blend the water repellent groups into the antifog layer 7, it is sufficient that a metallic compound containing a water repellent group (water repellent group-containing metallic compound), particularly a metallic compound (water repellent group-containing hydrolyzable metallic compound) containing a water repellent group and a hydrolyzable functional group or a halogen atom, or a hydrolysate thereof is added to a coating solution for forming a film. In other words, the water repellent group may be derived from the water repellent group-containing hydrolyzable metallic compound. A water repellent group-containing hydrolyzable silicon compound represented by Formula (I) below is favorably used as the water repellent group-containing hydrolyzable metallic compound.

RₘSiY₄₋ₘ (I)

where R represents a water repellent group, that is, a chain or cyclic alkyl group having 1 to 30 carbon atoms in which at least a portion of hydrogen atoms are optionally substituted with a fluorine atom, and Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, and preferably an alkoxy group, particularly an alkoxy group having 1 to 4 carbon atoms. An example of the alkenyloxy group is an isopropenoxy group. The halogen atom is preferably a chlorine atom. Note that the functional groups shown here as examples can also be used as "hydrolyzable functional groups" described hereinafter. m is preferably 1 or 2.

When hydrolysis and polycondensation are complete, the compound represented by Formula (I) supplies a component represented by Formula (II) below.

RₘSiO_{(4-m)/2} (II)

where R and m are as described above. In practice, after the hydrolysis and polycondensation have been performed, the compounds represented by Formula (II) form a network structure in which silicon atoms are bonded to one another via oxygen atoms, in the antifog layer 7.

As described above, the compounds represented by Formula (I) are hydrolyzed or partially hydrolyzed, and at least portions thereof are further polycondensed. Thus, a network structure including siloxane bonds (Si-O-Si) is formed in which silicon atoms and oxygen atoms are alternately bonded and that spreads out three-dimensionally. A water repellent group R is bonded to the silicon atom contained in this network structure. In other words, the water repellent group R is immobilized in the network structure including siloxane bonds via an R-Si bond. This structure is advantageous in uniform dispersion of the water repellent groups R in the film. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound in a coating solution for forming the antifog layer 7, a network structure including siloxane bonds containing silicon atoms that are bonded to water repellent groups and silicon atoms that are not bonded to water repellent groups can be formed. With such a structure, it is easy to independently adjust the content of the water repellent group and the content of the metallic oxide component in the antifog layer.

The water repellent groups have the effect of enhancing the antifog performance by enhancing water vapor permeability of the surface of the antifog layer 7 containing a water absorbent resin. The two functions, namely the water absorbent function and the water repellent function, are contrary to each other, and therefore, conventionally, a water absorbent material and a water repellent material are distributed in separate layers. However, the uneven distribution of water near the surface of the antifog layer is resolved by the water repellent groups, so that the time it takes for dew to form thereon is prolonged, and the antifog properties of the antifog layer having a single-layer structure are thus enhanced. The following is a description of the effects.

Water vapor that has infiltrated the antifog layer 7 containing the water absorbent resin forms hydrogen bonds with the hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog layer. The water repellent groups prevent the formation of hydrogen bonds and facilitate the dissociation of formed hydrogen bonds in the antifog film 7. If the content of the water absorbent resin is the same, the number of hydroxy groups capable of forming a hydrogen bond in the film is the same, but the speed of hydrogen bond formation is reduced due to the water repellent groups. Therefore, if the antifog layer 7 containing the water repellent groups is used, moisture will ultimately be retained in any of the above-mentioned forms in the antifog layer 7, but water vapor can diffuse to the bottom portion of the film as it is until it is retained therein. Furthermore, water that is once retained dissociates relatively quickly and is likely to move to the bottom portion of the film in the form of water vapor. As a result, the distribution of the retained amount of moisture in the thickness direction of the film is relatively uniform between the vicinity of the surface and the bottom portion of the film. That is, the entirety of the antifog layer in the thickness direction thereof can be effectively used to absorb water supplied to the surface of the film, and therefore, water droplets are less likely to be formed on the surface thereof through condensation, thus resulting in the enhancement of antifog properties. Also, the antifog layer that has absorbed moisture due to water droplets being less likely to form on the surface thereof through condensation is less likely to freeze even in low temperatures.

On the other hand, with an antifog layer that does not contain the water repellent groups, water vapor that has infiltrated the film is significantly likely to be retained in the form of bound water, semibound water, or free water. Therefore, water vapor that has infiltrated the antifog film tends to be retained in the vicinity of the surface of the film. As a result, in the film, the amount of moisture is extremely large in the vicinity of the surface, and rapidly decreases toward the bottom portion of the film. That is, although the bottom portion of the film can further absorb water, the vicinity of the surface of the film is saturated with moisture and the moisture condenses into water droplets, and therefore, the antifog properties are limited.

When the water repellent groups are introduced into the antifog layer using the water repellent group-containing hydrolyzable silicon compound (see Formula (I)), a network structure including stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in an amount with which the contact angle of water on the surface of the antifog layer is 70 degrees or more, preferably 80 degrees or more, and more preferably 90 degrees or more. A measurement value obtained from a 4 mg water droplet dropped onto the surface of the film is taken as the contact angle of water. In particular, when a methyl group or ethyl group, which has slightly low water repellency, is used as the water repellent group, it is preferable to blend, into the antifog layer, the repellent groups in an amount with which the contact angle of water is within the above-mentioned range. The upper limit of the contact angle of this water droplet is not particularly limited, and is 150 degrees or less, 120 degrees or less, or 100 degrees or less, for example. It is preferable that the water repellent groups are uniformly contained in the antifog layer such that the contact angles of water droplets are within the above-mentioned range over the entire region of the surface of the antifog layer.

It is preferable that the antifog layer contains the water repellent groups such that the amount of water repellent groups is within a range of 0.05 parts by mass or more, preferably within a range of 0.1 parts by mass or more, and more preferably within a range of 0.3 parts by mass or more, and within a range of 10 parts by mass or less and preferably within a range of 5 parts by mass or less, with respect to 100 parts by mass of the water absorbent resin.

### Inorganic Oxide

The inorganic oxide is an oxide of at least one type of element selected from Si, Ti, Zr, Ta, Nb, Nd, La, Ce, and Sn, for example, and preferably includes at least an oxide of Si (silica). It is preferable that the organic-inorganic composite antifog layer contains the inorganic oxide such that the amount of the inorganic oxide is preferably 0.01 parts by weight or more, more preferably 0.1 parts by weight or more, further preferably 0.2 parts by weight or more, particularly preferably 1 part by weight or more, most preferably 5 parts by weight or more, and 10 parts by weight or more, and 20 parts by weight or more if necessary, and preferably 50 parts by weight or less, more preferably 45 parts by weight or less, further preferably 40 parts by weight or less, particularly preferably 35 parts by weight or less, most preferably 33 parts by weight or less, and 30 parts by weight or less if necessary, with respect to 100 parts by weight of the water absorbent resin. The inorganic oxide is a necessary component for ensuring the strength of the organic-inorganic composite antifog layer, particularly abrasion resistance, but if the content of the inorganic oxide is excessively high, the antifog properties of the organic-inorganic composite antifog layer will be impaired.

### Minute Particles of Inorganic Oxide

The organic-inorganic composite antifog layer may further contain minute particles of an inorganic oxide as at least a portion of the inorganic oxide. An inorganic oxide constituting the minute inorganic oxide particles is an oxide of at least one type of element selected from Si, Ti, Zr, Ta, Nb, Nd, La, Ce, and Sn, for example, and minute silica particles are preferable. The minute silica particles can be introduced into the organic-inorganic composite antifog layer by adding colloidal silica thereto, for example. The minute inorganic oxide particles excel at transmitting stress applied to the organic-inorganic composite antifog layer to an article that supports the organic-inorganic composite antifog layer, and have high hardness. Therefore, the addition of the minute inorganic oxide particles is advantageous from the viewpoint that the abrasion resistance of the organic-inorganic composite antifog layer is enhanced. Also, when the minute inorganic oxide particles are added to the organic-inorganic composite antifog layer, minute voids are formed in portions where the minute particles are in contact with one another or close to one another, and water vapor is likely to be introduced into the film through these voids. Accordingly, the addition of minute inorganic oxide particles may advantageously act to enhance the antifog properties. Minute inorganic oxide particles that have been formed in advance are added to a coating solution for forming an organic-inorganic composite antifog layer, and the minute inorganic oxide particles can thus be supplied to the organic-inorganic composite antifog layer.

When the average particle diameter of the minute inorganic oxide particles is excessively large, the organic-inorganic composite antifog layer may be opaque, whereas when the average particle diameter of the minute inorganic oxide particles is excessively small, the minute particles aggregate, thus making it difficult to uniformly disperse the minute particles. From this viewpoint, the average particle diameter of the minute inorganic oxide particles is preferably 1 to 20 nm, and more preferably 5 to 20 nm. Note that the average particle diameter of the minute inorganic oxide particles in the form of primary particles is taken as the average particle diameter of the minute inorganic oxide particles described herein. The average particle diameter of the minute inorganic oxide particles is determined by measuring, through observation using a scanning electron microscope, the particle diameters of fifty randomly selected minute particles and employing the average value thereof. If the content of the minute inorganic oxide particles is excessively high, there is a risk that the water absorption amount will decrease in the entire organic-inorganic composite antifog layer, and thus the organic-inorganic composite antifog layer will become opaque. It is preferable to add the minute inorganic oxide particles such that the amount thereof is preferably 0 to 50 parts by weight, more preferably 2 to 30 parts by weight, further preferably 5 to 25 parts by weight, and particularly preferably 10 to 20 parts by weight with respect to 100 parts by weight of the water absorbent resin.

### Hydrolyzable Metallic Compound Containing No Water Repellent Groups

The antifog layer may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (note that a water repellent group is not contained) selected from silicon alkoxide, chlorosilane, acetoxysilane, alkenyloxysilane, and aminosilane, and silicon alkoxide that does not contain a water repellent group is preferable. Note that an example of the alkenyloxysilane is isopropenoxysilane.

The hydrolyzable silicon compound that does not contain a water repellent group may be a compound represented by Formula (III) below.

SiY₄ (II I)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are bonded is supplied. This component firmly joins minute particles of a metallic oxide and the water absorbent resin to each other, and may contribute to an increase in the abrasion resistance, hardness, water resistance, and the like of the antifog layer. It is preferable to set the amount of the metallic oxide component derived from the hydrolyzable metallic compound that does not contain a water repellent group to be within a range of 0 to 40 parts by mass, preferably 0.1 to 30 parts by mass, more preferably 1 to 20 parts by mass, particularly preferably 3 to 10 parts by mass, and 4 to 12 parts by mass if necessary, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane, for example.

If the content of the metallic oxide (silica) component derived from tetraalkoxysilane is excessively high, the antifog properties of the antifog layer may be impaired. One reason for this is that the flexibility of the antifog layer is impaired, and thus the swelling and shrinkage of the film caused by the absorption and discharge of moisture are limited. It is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly bonded to a silicon atom has 1 to 3 carbon atoms. Because a glycidyloxyalkyl group and an aminoalkyl group contain a hydrophilic functional group (epoxy group, amino group), they are not water-repellent as a whole even though they contain an alkylene group.

The silane coupling agent firmly couples water absorbent resin, which is an organic component, and the minute particles of a metallic oxide and the like, which are inorganic components, and may contribute to the enhancement of the abrasion resistance, hardness, water resistance, and the like of the antifog film. However, when the content of the metallic oxide (silica) component derived from the silane coupling agent is excessively high, the antifog properties of the antifog layer are impaired, and the antifog layer may be opaque in some cases. It is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-Linked Structure

The antifog layer may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog layer. From another viewpoint, the introduction of the cross-linked structure facilitates an improvement in the durability of the antifog layer without impairing the antifog properties of the antifog layer.

When the cross-linked structure formed using a cross-linking agent is introduced into the antifog layer in which the metallic oxide component is a silica component, the antifog layer may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is at least one selected from a titanium alkoxide, a titanium chelate-based compound, and titanium acylate, for example. Examples of the titanium alkoxide include titanium tetraisopropoxide, titanium tetra-n-butoxide, and titanium tetraoctoxide. Examples of the titanium chelate compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate compound, particularly titanium lactate.

When the water absorbent resin is polyvinyl acetal, a preferable cross-linking agent is an organic titanium compound, particularly titanium lactate.

Furthermore, when a cross-linked structure is formed by the above-described hydrolyzable metallic compound such as silicon alkoxide, the adhesion between the antifog layer 7 and the mirror main body 1 is improved, and the antifog layer 7 can exhibit a shatterproof function. The amount of silicon alkoxide added to the coating solution for an antifog layer used when forming the antifog layer is 1 part by mass or more and more preferably 1.5 parts by mass or more, and 50 parts by mass or less, and more preferably 30 parts by mass or less, with respect to 100 parts by mass of the water absorbent resin constituted by polyvinyl acetal or poly epoxy resin. If a small amount of the hydrolyzable metallic compound is added, the adhesion between the mirror main body 1 and the antifog layer 7 decreases, and the antifog layer 7 is likely to peel away from the mirror main body 1. On the other hand, if a large amount of the hydrolyzable metallic compound is added, the antifog layer 7 is hardened, and thus, the antifog layer 7 is likely to tear when the mirror main body 1 is fractured. Therefore, the shatterproof function of the antifog layer 7 is impaired.

### Other Optional Components

Other additives may also be blended into the antifog layer. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as an additive.

### Undercoat Layer

Although the antifog layer 7 can also be directly laminated on the glass plate 2, an undercoat layer can be formed on the glass plate 2 and the antifog layer 7 can also be laminated thereon. Laminating the antifog layer 7 on the glass plate 2 via the undercoat layer in this manner makes it possible to make the antifog layer 7 unlikely to peel away. A silane coupling agent or the like can be adopted for the undercoat layer, for example.

### Film Thickness

It is sufficient that the film thicknesses of the organic-inorganic composite antifog layer is adjusted as appropriate according to required antifog properties and the like. The thickness of the organic-inorganic composite antifog layer is preferably 2 to 12 µm, more preferably 2 to 15 µm, and further preferably 3 to 10 µm. When the thickness of the antifog layer 7 is 2 µm or more, it is possible to obtain a sufficient antifog effect. However, it is not preferable that the antifog layer 7 is excessively thick, because the edge portion thereof is likely to be visible. To address this, as shown in FIG. 6, the antifog layer 7 can be extended so as to cover the second chamfered portion 14 from the edge portion of the first main face 11, for example. Alternatively, the antifog layer 7 can also be extended so as to cover the entirety or a portion of the peripheral edge face 13. As a result, the edge portion of the antifog layer 7 can be made invisible even if the antifog layer 7 is thick. Furthermore, if the antifog layer 7 is excessively thick, a reflected image may be distorted due to uneven film thickness. Also, because the antifog layer 7 is made of a resin material as described above and has birefringence, if the antifog layer 7 is too thick, images may be blurred.

Note that it is also possible to provide the above-described peripheral edge protective layer and antifog layer. At this time, although there is no particular limitation on the order of forming the antifog layer 7, if the peripheral edge protective layer 5 shown in FIG. 4 is formed, the antifog layer 7 is preferably formed thereafter, for example. This is because if the antifog layer 7 is formed before the peripheral edge protective layer 5, an acidic solution contained in the solution for an antifog layer may come into contact with the interfaces between members that are exposed from the peripheral edge face 13 of the mirror main body 1, and thus the antifog layer 7 is preferably formed before the peripheral edge protective layer 5 in order to prevent this contact. In this case, there are cases where the antifog layer 7 is laminated on a portion of the peripheral edge protective layer 5. Also, the peripheral edge face 13 of the mirror main body 1 may be completely covered by either the peripheral edge protective layer 5 or the antifog layer 7 or may be partially exposed. At least a portion of the end face of the glass plate 2 may be exposed, for example.

Incidentally, if the antifog layer 7 is extended to the peripheral edge face 13 as described above, the thickness of the antifog layer 7 on the peripheral edge face 13 is larger than the thickness of the antifog layer 7 on the first main face 11 due to surface tension. Note that, considering productivity and cost, it is conceivable to form a large mirror main body, laminate the antifog layer thereon, and cut out a mirror to a size that meets the requirements of various products. However, the required specifications such as antifog performance change depending on the types of products, and thus it is preferable to cut the mirror main body to a required product size and laminate the antifog layer 7. Accordingly, it is possible to reduce unnecessary inventory and support multi-product production.

### Hardness

As for the hardness of the antifog layer 7, the antifog layer 7 preferably has a pencil hardness of H to 2H, the pencil hardness being defined in JIS K5600-5-4, for example. This is because, if the antifog layer is excessively hard, sufficient antifog performance cannot be obtained, whereas if the antifog layer is excessively soft, the antifog layer will have poor durability.

### Antifog Layer Formation Range

Although the antifog layer 7 can also be laminated on the entire glass plate 2 as described above, when a frame body for supporting the mirror main body 1 is provided, for example, it is possible to avoid formation of the antifog layer 7 in a region where the frame body is attached. This is because the antifog layer is likely to be scratched as a result of attaching the frame body. The portion where the frame body is provided can be regarded as a region spanning about 5 mm inward from the peripheral edge of the glass plate, for example. Such a region can be formed by masking the peripheral edge of the glass plate 2 when forming the antifog layer 7, for example.

Note that the above-described antifog layer is an example, and another known antifog layer can be used. Various antifog layers such as the antifog layer disclosed in JP 2001-146585A can be used, for example. Furthermore, by forming the antifog layer as described above, the time taken for dew to form in an antifog performance test, which will be described below, may be 30 seconds or more, preferably 60 seconds or more, and more preferably 100 seconds or more.

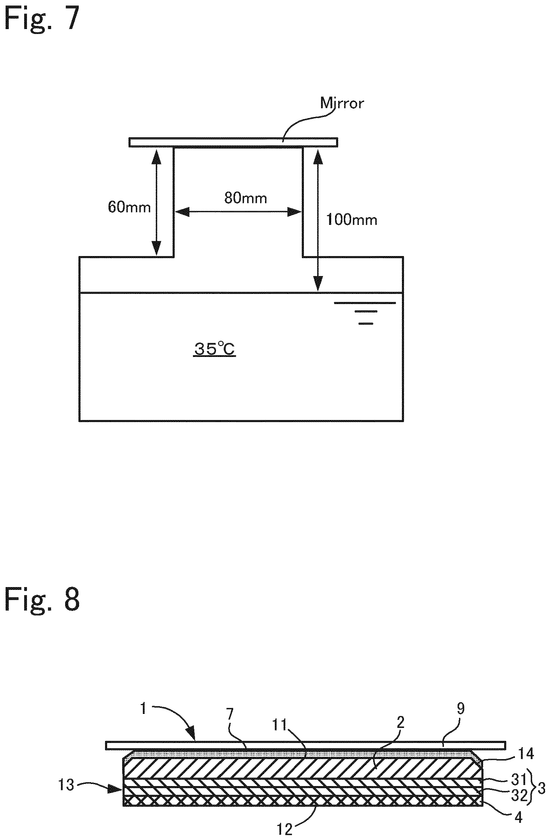

The antifog performance test can be performed as follows in an environment at a room temperature of 20°C to 23°C and a humidity of 20% to 23% RH. First, as shown in FIG. 7, a cylinder having an inner diameter of 80 mm and an axial length of 60 mm was prepared, and the cylinder was disposed at an upper portion of a water tank in which water kept at 35°C was stored. At this time, the distance between the upper end of the cylinder and the water surface of the water tank was set to 100 mm. Subsequently, the mirror provided with the antifog layer 7 was stored at 20°C and 30% RH for 30 minutes or more, and was disposed to cover the upper opening of the cylinder. At this time, the antifog layer 7 was disposed to face downward and face the water. Then, the time taken until the antifog layer 7 became fogged up was measured.

### 4. Protective Film

The antifog layer 7 can also be covered by a protective film. The protective film can be constituted by a sheet-shaped base member and an adhesive agent layer laminated on one face of the base member. Also, it is possible to protect the antifog layer 7 by attaching the adhesive agent layer to the antifog layer. Note that the protective film is to be detached when the mirror is used. The material for forming the base member is not particularly limited, and the base member can be made of a resin material such as polyethylene terephthalate, polyvinyl chloride, polyvinylidene chloride, polycarbonate, or acrylic resin, for example.

The adhesive agent layer need only be capable of fixing the base member to the antifog layer 7 with appropriate strength. Specifically, it is possible to use an adhesive layer composed of acrylic resin, rubber, or resin that has tackiness at room temperature, the resin being obtained through copolymerization of a methacrylic monomer and an acrylic monomer, and being set to a desired glass transition temperature, and the like. It is possible to use methyl acrylate, ethyl acrylate, butyl acrylate, stearyl acrylate, 2-ethylhexyl acrylate, and the like as the acrylic monomer, and to use ethyl methacrylate, butyl methacrylate, isobutyl methacrylate, stearyl methacrylate, and the like as the methacrylic monomer. Also, if the adhesive layer is applied through heat lamination or the like, an organic substance that softens at the lamination temperature may be used. When a resin obtained through copolymerization of a methacrylic monomer and an acrylic monomer is used, the glass transition temperature can be adjusted by changing the ratio of blended monomers.

The thickness of the protective film is not particularly limited, and may be 30 to 90 µm, for example. If the protective film is excessively thin, the protective film may not be able to protect the antifog layer 7 sufficiently, and the antifog layer 7 may be scratched. On the other hand, if the protective film is excessively thick, it may be difficult to attach the protective film to the antifog layer.

The flexural strength of the protective film is not particularly limited, and may be 96 to 131 MPa, for example. This is because, if the flexural strength of the protective film is low, the protective film may come into intimate contact with the end edge of the antifog layer 7 and be difficult to peel off. On the other hand, if the flexural strength of the protective film is high, it may be difficult to attach the protective film to the antifog layer 7.

The protective film can cover the antifog layer 7 in various ways. The protective film can be formed in the same area as that of the antifog layer 7 so as to cover the entire antifog layer 7, or, as shown in FIG. 8, the protective film 9 can also be formed so as to protrude outward from the peripheral edge face 13, for example. This makes it possible to easily peel off the protective film 9 by holding the protruding portion thereof. At this time, the protruding portion may be bent along the peripheral edge face. Furthermore, in order to reduce the size of the protruding portion, it is possible to make only a portion that corresponds to the second chamfered portion 14 protrude.

Also, the antifog layer 7 may be covered by one protective film or multiple protective films. That is, the protective film may be divided.

### 5. Shatterproof Layer

In order to prevent fragments from scattering when the mirror is cracked, a shatterproof layer may be laminated on the protective layer 4. The shatterproof layer can be made of a resin material such as polyester, polyethylene terephthalate, or polycarbonate, for example, and can be fixed to the protective layer 4 by an adhesive.

### 6. Features

According to the above-described mirror, it is possible to obtain the following effects.
(1) The mirror main body 1 is provided with the first chamfered portions 132, which is advantageous in that the mirror main body 1 is unlikely to chip when the mirror is dropped. Furthermore, similar effects can be obtained by the second chamfered portion 14.
(2) By forming the antifog layer 7, it is possible to prevent the glass plate 2 of the mirror main body 1 from fogging up.
(3) By forming the antifog layer 7 on the first main face 11 of the mirror main body 1, an impact from the first main face 11 side can be absorbed by the antifog layer 7. As a result, even if the glass plate 2 is damaged, it is possible to inhibit glass pieces from scattering.
(4) As described above, the antifog layer 7 can be made of various materials. However, if the antifog layer 7 is made of a material containing a water absorbent resin as the main component, for example, the antifog layer 7 has the ability to absorb water and extend and shrink, and thus the antifog layer 7 can absorb an impact. As a result, it is possible to alleviate the impact and suppress damage to the glass plate 2. Furthermore, because absorbent resin can extend and shrink and is firmly bonded to the glass plate 2, it is possible to inhibit glass pieces from scattering even if the glass plate 2 is damaged.

### 7. Variations

Although an embodiment of the present invention has been described above, the present invention is not limited to the above embodiment, and various modifications can be made without departing from the spirit of the present invention. Note that the following variations can be combined as appropriate.

Although an example in which the metal layer and the protective layer are laminated on the glass plate in the stated order was described in the above-described embodiment, a semi-transmissive reflective film may also be laminated, instead of these layers. The semi-transmissive reflective film is a film that functions as a so-called half-mirror. The semi-transmissive reflective film includes a first layer laminated on the glass plate and a second layer laminated on the first layer as an example. However, it is also possible to provide additional layers such as a third layer and a fourth layer as needed. If a metallic reflective layer made of a metal or metalloid is used as a layer constituting the semi-transmissive reflective film, it is possible to stack one or more units each including two layers in which a low refractive index layer or a high refractive index layer is layered directly on the metallic reflective layer, or one or more units in which a low refractive index layer and a high refractive index layer are layered on a metallic reflective layer. If no metallic reflective layer is used, it is possible to stack, on a high refractive index layer, one or more units in which a low refractive index layer and a high refractive index layer are layered in the stated order. The refractive index of a high refractive index layer is preferably 1.6 or more, and more preferably 1.8 or more, for example. The refractive index of a low refractive index layer is lower than the refractive index of a high refractive index layer, and is preferably 1.6 or less, and more preferably 1.5 or less, for example. Note that the high refractive index layer and the low refractive index layer can also be formed by layering one or more materials as long as these materials satisfy the conditions of the refractive indexes.

Next, the materials of the layers of the semi-transmissive reflective film will be described. The layers constituting a semi-transmissive reflective film can be formed by a layer made of a metal or metalloid and a layer made of an inorganic metal oxide (inorganic oxide layer), for example, and the materials thereof are selected as appropriate from silicon (Si), germanium (Ge), SUS or another suitable metal or metalloid, silicon dioxide (SiO₂), tin oxide (SnO₂), titanium dioxide (TiO₂), or other suitable inorganic metal oxides such that the above-described ranges of refractive indexes are satisfied. The refractive indexes of silicon, silicon dioxide, tin oxide, titanium dioxide, SUS, Ag, Al, Cr, Mo, and Ti are respectively about 4.4, about 1.4, about 1.8, about 2.2, about 2.4, about 0.14, about 1.4, about 2.4, about 3.6, and about 2.7, for example. Note that the layer structure of the semi-transmissive reflective film is not particularly limited, and may be formed as follows, for example. Also, the layers may be optionally doped with additives in order to adjust the electrical resistances of the layers. Note that Ag, Al, Cr, Ti, or Mo can also be adopted, instead of Si in the first layers of the examples 2 and 3.

**Table 1**

| | First Layer | Second Layer | Third Layer | Fourth Layer |
|---|---|---|---|---|
| Example 1 | TiO₂ | - | - | - |
| Example 2 | Si | SiO₂ | SnO₂ | - |
| Example 3 | TiO₂ | SiO₂ | SnO₂ | - |
| Example 4 | Si | SiO₂ | - | - |
| Example 5 | SUS | TiO₂ | - | - |

Note that it is possible to provide SiO₂ as an undercoat layer between the first layer and the glass plate 2 in the examples 1 and 3. Furthermore, when SUS is used, visible light absorptance can be improved. When visible light absorptance is improved, the total value of the visible light reflectance and visible light transmittance decreases, and thus the visible light reflectance and the visible light transmittance can be easily adjusted.

If a semi-transmissive reflective film is made of an inorganic metal oxide containing a metal or metalloid as described above, the color tone does not change significantly when the semi-transmissive reflective film is viewed from a wide angle, and thus the mirror of the present invention is suitable as an optical cover glass. However, it is preferable that a metallic reflective layer is not disposed on the outermost surface of the mirror because the metallic reflective layer is fragile. Furthermore, alkali resistance can be improved by providing an inorganic metal oxide layer.

The film thickness (physical film thickness) of the semi-transmissive reflective film is preferably a 3 to 300 nm, and more preferably 5 to 250 nm. If the film thickness of the semi-transmissive reflective film is less than 10 nm, it will be difficult to control the film thickness, which leads to the problem of the productivity deteriorating. On the other hand, if the film thickness thereof exceeds 300 nm, costs may increase, or surface unevenness may become noticeable, the haze ratio may increase, and the appearance thereof may be poor. Furthermore, the film thicknesses of the layers constituting the semi-transmissive reflective film can be adjusted as appropriate such that the film thickness of the semi-transmissive reflective film is in the above-described range, and are not particularly limited. In the above-described example 2, it is possible to form a semi-transmissive reflective film in which the first layer has a thickness of 18 nm, the second layer has a thickness of 85 nm, and the third layer has a thickness of 65 nm, for example. In the above-described example 4, it is possible to set the silicon film thickness to about 18 nm, and the silicon dioxide film thickness to about 30 nm. In addition, it is possible to set the titanium dioxide film thicknesses of the example 1 and the example 3 to about 6 nm, and to set the SUS film thickness of the example 5 to about 8 nm.

Furthermore, in the example 2, in order to enhance reflection in the first layer, a low refractive material can be laminated on the second layer, and a high refractive material can be laminated on the third layer. If the first layer is set to have a thickness of 18 nm, the second layer is set to have a thickness of 85 nm, and the third layer is set to have a thickness of 65 nm, and the optical film thickness of the semi-transmissive reflective film is set to 135 nm ± 20 nm, as described above, for example, the optical film thickness is λ/4 with respect to the wavelength A of the incident light (center wavelength: 550 nm), and thus, it is possible to enhance the reflection at the interface between the first layer and the second layer. If the film thickness and the refractive index of each layer can be adjusted in this manner, materials other than materials described in the example 2 may be used.

The visible light transmittance of the mirror obtained by providing the semi-transmissive reflective film is preferably 20% or more and 70% or less, more preferably 35% or more and 60% or less, and particularly preferably 35% or more and 50% or less. On the other hand, the visible light reflectance of the mirror has a trade-off relationship with visible light transmittance, and thus, is preferably 30% or more and 80% or less, more preferably 40% or more and 65% or less, and particularly preferably 50% or more and 65% or less.

The visible light transmittance and the visible light reflectance of such a mirror can be adjusted by changing the materials constituting the semi-transmissive reflective film, the film thickness of the semi-transmissive reflective film, and the material and thickness of the glass plate 2.

Next, a method for forming a semi-transmissive reflective film will be described. Although the method for forming a semi-transmissive reflective film is not particularly limited, it is possible to adopt a so-called physical vapor deposition method such as a sputtering method or a vacuum vapor deposition method, a spray method, or a chemical vapor deposition (CVD) method, for example. In particular, if a CVD method is adopted, it is preferable to adopt an online CVD method. The online CVD method is one type of chemical vapor deposition method in which, in a float glass manufacturing process, a material for a semi-transmissive reflective film is supplied from a coater onto the top surface of a glass ribbon placed on a molten tin bath and having a temperature of 615°C or higher, and a semi-transmissive reflective film is formed through pyrolysis and oxidation reaction.

Although one material can be supplied from one coater in order to form each layer of the semi-transmissive reflective film, if the film thickness of a layer is large, one layer can also be formed using two or more coaters. In the above-described example 4, when the silicon film thickness is 18 nm and the silicon dioxide film thickness is 30 nm, it is possible to form a semi-transmissive reflective film by preparing first to third coaters, supplying silicon using the first coater, and supplying silicon dioxide using the second and third coaters, for example.

Note that the above-described SUS film can be formed through sputtering, instead of CVD. Also, it is preferable to use sputtering in order to form a film using a thin material.

### Examples

Hereinafter, an example of the present invention will be described. However, the present invention is not limited to the following example. Hereinafter, the performance of an antifog film will be evaluated.

### (1) Preparation of Mirror according to Example As described below, a mirror was prepared as a test sample .

### (i) Mirror Main Body

A mirror main body in which the above-described semi-transmissive reflective film was laminated on the second main face of a glass plate (soda lime silicate glass with a thickness of 3.1 mm and a size of 100 mm × 100 mm) was prepared.

### (ii) Antifog Layer

62.5 mass% of a solution containing a polyvinyl acetal resin ("S-LEC KX-5" manufactured by Sekisui Chemical Co., Ltd.; a solid content was 8 mass%, the degree of acetalization was 9 mol%, and it had an acetal structure derived from benzaldehyde), 1.04 mass% of tetraethoxysilane (TEOS, "KBE-04" manufactured by Shin-Etsu Chemical Co., Ltd.), 1.21 mass% of titanium lactate ("ORGATIX TC-310" manufactured by Matsumoto Fine Chemical Co., Ltd.; a solution containing Ti(OH)₂[OCH(CH₃)COOH]₂) in an amount of 44 mass% and a mixed solvent of 2-propanol and water), 17.79 mass% of an alcohol solvent ("Solmix AP-7" manufactured by Alcohol Trading Co., Ltd.), 17.44 mass% of purified water, 0.01 mass% of nitric acid serving as an acid catalyst, and 0.01 mass% of a leveling agent ("KP-341" manufactured by Shin-Etsu Chemical Co., Ltd.) were placed in a glass container, and stirred at room temperature (25°C) for 3 hours. A coating solution for an antifog film was thus prepared.

Then, the coating solution was applied through flow coating to the first main face of the above-described mirror main body at a room temperature of 20°C in an environment at a relative humidity of 30%. After the resulting mirror main body was dried in the same environment for 10 minutes, (preliminary) heating treatment at 120°C was performed. Then, a mirror according to the example was produced by performing high-temperature and high-humidity treatment by applying the above-described atmosphere and time, and performing additional heat treatment by applying the above-described atmosphere and time. The film thickness of the antifog layer was 3.9 µm.

The mirror produced as described above was evaluated as follows. First, whether the antifog layer had peeled away was evaluated using the cross-cut method defined in JIS K5600-5-1. As a result, the antifog layer was evaluated as classification 0 (the edges of the cuts were completely smooth, and none of the squares of the lattice were detached) . Thus, it was found that the antifog layer according to the example exhibited high adhesion to the mirror main body. Note that it is conceivable that the antifog layer is acceptable for actual use even if it is classified as classification 1.

Then, the shatterproof function was evaluated. First, a linear cut was formed in the second main face of the mirror main body 1 using a glass cutter. Note that a wheel cutter or a diamond cutter can be also used instead of a glass cutter. Then, a round bar whose diameter was two times the thickness of the glass plate was placed on a horizontal surface. Subsequently, the mirror was disposed on the round bar with the antifog layer facing downward. At this time, the round bar was brought into contact with the antifog layer such that the round bar coincided with the cut (so as to extend along the cut). Thereafter, the mirror main body was cracked by pressing both sides of the cut in the second main face of the mirror main body simultaneously toward the horizontal surface. At that time, when a check was to made as to whether or not the antifog layer was split, the antifog layer was not split. Therefore, the antifog layer was not fractured even when the mirror main body was cracked, and thus it was found that it is possible to prevent fragments of the cracked mirror main body from scattering.

### List of Reference Numerals

- 1: Mirror main body
- 11: First main face
- 12: Second main face
- 13: Peripheral edge face
- 132: First chamfered portion
- 14: Second chamfered portion
- 2: Glass plate
- 3: Metal layer
- 5: Protective layer
- 7: Antifog layer

## Claims

1. A mirror comprising:
a mirror main body formed in a polygonal shape in a plan view and having a first main face that reflects an image, a second main face that is opposite to the first main face, and a peripheral edge face that connects the first main face and the second main face to each other,
wherein the peripheral edge face includes a plurality of first end faces and a second end face that connects the adjacent first end faces, and
the second end face constitutes a first chamfered portion formed at an outer edge of the mirror main body in a plan view.

2. The mirror according to claim 1,
wherein a second chamfered portion is formed between the first main face and the peripheral edge face.

3. The mirror according to claim 1 or 2, further comprising
an antifog layer covering at least a portion of the first main face.

4. The mirror according to claim 3,
wherein the antifog layer and the first main face are chemically bonded.

5. The mirror according to claim 3 or 4, further comprising
an undercoat layer disposed between the antifog layer and the first main face.

6. The mirror according to any one of claims 3 to 5,
wherein a second chamfered portion is formed between the first main face and the peripheral edge face, and
the antifog layer is disposed so as to cover the second chamfered portion.

7. The mirror according to claim 6,
wherein the antifog layer is disposed so as to cover the peripheral edge face.

8. The mirror according to claim 7,
wherein the antifog layer has a pencil hardness of H to 2H.

9. The mirror according to any one of claims 3 to 8,
wherein the antifog layer has a thickness of 2 to 12 µm.

10. The mirror according to any one of claims 3 to 9,
wherein the antifog layer is not disposed in a peripheral edge region having a predetermined width and extending from the peripheral edge of the first main face toward the center thereof.

11. The mirror according to any one of claims 3 to 9,
wherein the entire first main face is covered by the antifog layer.

12. The mirror according to any one of claims 3 to 11,
wherein the antifog layer is disposed so as to cover the peripheral edge face, and
the thickness of the antifog layer disposed on the peripheral edge face is larger than the thickness of the antifog layer disposed on the first main face.

13. The mirror according to any one of claims 3 to 12,
wherein the antifog layer has antifog performance as a result of being hydrophilic.

14. The mirror according to claim 13,
wherein the antifog layer further has antifog performance as a result of having a water absorbing property.

15. The mirror according to claim 11,
wherein the antifog layer is made of a material containing a water absorbent resin as a main component.

16. The mirror according to claim 15,
wherein the water absorbent resin contains at least one of an epoxy resin and a polyvinyl acetal resin.

17. The mirror according to any one of claims 3 to 16,
wherein the antifog layer has a shatterproof function.

18. The antifog mirror according to claim 17,
wherein the antifog layer has a cross-linked structure formed by a hydrolyzable metallic compound.

19. The antifog mirror according to claim 18,
wherein the hydrolyzable metallic compound is made of silicon alkoxide.

20. The antifog mirror according to any one of claims 17 to 19,
wherein adhesion of the antifog layer to the mirror main body is classified as classification 0 or 1 in a cross-cut test defined in JIS K5600-5-6.

21. The antifog mirror according to any one of claims 17 to 20,
wherein the antifog layer is not split when a linear cut is formed in the second main face of the mirror main body using a cutter, a round bar placed on a horizontal surface is brought into contact with the antifog layer facing downward so as to coincide with the cut, and the mirror main body is cracked by pressing both sides of the cut.

22. The mirror according to any one of claims 3 to 21, further comprising
a protective film covering the antifog layer.

23. The mirror according to claim 22,
wherein the protective film has a sheet-shaped base member and an adhesive layer disposed on one face of the base member,
the base member is bonded to the antifog layer by the adhesive layer, and
a peripheral edge portion of the base member has a region where the adhesive layer is not disposed.

24. The mirror according to claim 23,
wherein the antifog layer is disposed so as to cover the peripheral edge face, and
the protective film is not bonded to at least a portion of the antifog layer covering the peripheral edge face.

25. The mirror according to any one of claims 22 to 24,
wherein the protective film is formed so as to protrude from the mirror main body at a portion where the first chamfered portion is formed.

26. The mirror according to any one of claims 22 to 25,
wherein the protective film has a flexural strength of 96 to 131 MPa.

27. The mirror according to any one of claims 22 to 26,
wherein the protective film has a thickness of 30 to 90 µm.

28. The mirror according to any one of claims 22 to 27,
wherein the protective film is configured to cover the antifog layer in a state where the protective film is divided into a plurality of portions.

29. The mirror according to any one of claims 1 to 28,
wherein the mirror main body includes
a metal layer or a metalloid layer laminated on one face of the glass plate,
a resin protective layer laminated on the metal layer or the metalloid layer, and
an inorganic oxide layer made of an inorganic oxide and laminated between the metal layer or the metalloid layer and the protective layer.

30. The mirror according to claim 29,
wherein the metalloid layer contains Si or Ge as a main component.

31. The mirror according to any one of claims 1 to 28,
wherein the mirror main body includes a glass plate,
a metal layer laminated on one face of the glass plate, and
a resin protective layer laminated on the metal layer.

32. The mirror according to claim 31,
wherein another face of the glass plate constitutes the first main face, and
an antifog layer is disposed so as to cover the first main face.

33. The mirror according to claim 31 or 32, further comprising
a peripheral edge protective layer disposed so as to cover a first interface between the glass plate and the metal layer and a second interface between the metal layer and the protective layer, on the peripheral edge face.

34. The mirror according to claim 31,
wherein another face of the glass plate constitutes the first main face, and
an antifog layer is disposed so as to cover the first main face,
the mirror further includes a peripheral edge protective layer disposed so as to cover a first interface between the glass plate and the metal layer and a second interface between the metal layer and the protective layer, on the peripheral edge face, and
a portion of the antifog layer covers the peripheral edge protective layer.

35. The mirror according to claim 33 or 34,
wherein the peripheral edge protective layer is made of an ultraviolet curable resin.

36. The mirror according to any one of claims 33 to 35,
wherein, on the peripheral edge face, an end face of the glass plate exposed to the outside is provided with a region that is not covered by the peripheral edge protective layer.

37. The mirror according to any one of claims 31 to 36, further comprising
a shatterproof film configured to prevent fragments from scattering when the mirror main body cracks,
wherein the shatterproof film is disposed so as to cover the protective layer.

38. The mirror according to any one of claims 31 to 37,
wherein various types of information is written on the protective layer.

39. The mirror according to any one of claims 3 to 38,
wherein it takes 30 seconds or more for dew to form on the antifog layer.
